# EUROPEAN PATENT APPLICATION

(11) **EP 4 664 789 A1**
(43) Date of publication of application: **17.12.2025**
(21) Application number: 23920561.0
(22) Date of filing: 10.02.2023
(51) Int. Cl.: H04B 7/185, H04W 76/28, H04W 52/02

(54) **NEGOTIATION METHOD AND APPARATUS THEREFOR**

(71) Applicant: Beijing Xiaomi Mobile Software Co., Ltd., Beijing 100085 (CN)
(72) Inventor: MAO, Yuxin, Beijing 100085 (CN); LU, Wei, Beijing 100085 (CN); WU, Jinhua, Beijing 100085 (CN)
(74) Representative: Stöckeler, Ferdinand
(86) International application number: PCT/CN2023/075548
(87) International publication number: WO 2024/164354

(57) **Abstract**

Disclosed in embodiments of the present disclosure are a negotiation method and an apparatus therefor, which can be applied to communication systems such as a long term evolution system, a 5th generation (5G) mobile communication system, a 5G new radio system or other future novel mobile communication systems. The method comprises: receiving a terminal device capability indication of a terminal device under satellite access, and feeding back network indication information to the terminal device on the basis of the terminal device capability indication. According to the embodiments of the present disclosure, the network indication information is fed back to the terminal device on the basis of the terminal device capability indication to indicate whether a terminal supports power-saving management and mobility management under the condition of discontinuous coverage of satellite access, and random communication within a preset time range before imminent loss of satellite signal coverage and after restoration of the satellite signal coverage, thereby avoiding the problems of unreasonable resource consumption or network congestion and the like when the terminal accesses a network by using a discontinuous coverage satellite, and thus facilitating saving of terminal and network resources.

## Description

### FIELD

The present disclosure relates to the technical field of communications, and in particular to a negotiation method and a negotiation apparatus.

### BACKGROUND

In wireless communications, a network service is provided to a user via a satellite access. However, the satellite access may be affected by factors such as a limited coverage range of a satellite beam and insufficient satellites in a satellite constellation, which may result in a discontinuous signal coverage to the ground. Specifically, when the user accesses a network via a satellite in a certain area, there may be a certain period where no satellite signal coverage is available. Regarding a scenario where a satellite access network used by a terminal is in a discontinuous coverage, it is necessary to solve issues such as a power-saving management and a mobility management of the terminal based on a satellite coverage condition, and a random communication before an imminent loss of a satellite coverage and after a restoration of the satellite coverage, so as to avoid problems such as unreasonable resource consumption and network congestion of the terminal in the discontinuous coverage of the satellite access network.

### SUMMARY

Embodiments of the present disclosure provide a negotiation method and a negotiation apparatus, which may be applied to a communication system, such as a long term evolution (LTE) system, a 5th generation (5G) mobile communication system, a 5G new radio (NR) system, or other future new mobile communication systems. A UE capability indication of a UE for satellite access is received, and network indication information is provided to the UE based on the UE capability indication, to indicate whether the UE supports a power-saving management and a mobility management in the case of a discontinuous coverage for a satellite access, and a random communication within a preset time range before an imminent loss of a satellite signal coverage and after a restoration of the satellite signal coverage, thereby avoiding a problem such as unreasonable resource consumption or network congestion of the UE in the discontinuous coverage of the satellite access network.

In a first aspect, an embodiment of the present disclosure provides a negotiation method. The method includes:
receiving a UE capability indication of a UE for a satellite access, and providing network indication information to the UE based on the UE capability indication,
where the UE capability indication of the UE for the satellite access indicates at least one of the following capabilities:
   supporting a discontinuous coverage for the satellite access;
   supporting sending a power-saving parameter and a non-access stratum (NAS) timer;
   supporting sending satellite coverage information related to the UE;
   supporting a random communication before an imminent loss of a satellite coverage; or
   supporting a delayed communication after a restoration of a satellite coverage.

Optionally, the UE capability indication of the UE for the satellite access includes at least one of:
a first capability indication, indicating that the UE supports the discontinuous coverage for the satellite access, or that the discontinuous coverage is provided by a satellite network accessed by the UE;
a second capability indication, indicating that the UE supports providing power-saving parameter calculation;
a third capability indication, indicating that the UE supports providing the satellite coverage information related to the UE;
a fourth capability indication, indicating that the UE supports the random communication based on a first timer or before the imminent loss of the satellite coverage, where the first timer is used to control a communication between the UE and the network device before the imminent loss of the satellite coverage; or
a fifth capability indication, indicating that the UE supports the delayed communication based on a second timer or after the restoration of the satellite coverage, where the second timer is used to control a communication between the UE and the network device after the same satellite coverage is restored.

Optionally, the receiving the UE capability indication from the UE for the satellite access, and providing the network indication information to the UE based on the UE capability indication includes at least one of:
providing first network indication information to the UE, in response to receiving the first capability indication, where the first indication information indicates that the network device supports the discontinuous coverage for the satellite access;
providing second network indication information to the UE, in response to receiving the second capability indication, where the second indication information indicates that the UE provides the power-saving parameter and the NAS timer;
providing third network indication information to the UE, in response to receiving the third capability indication, where the third indication information indicates that the UE provides the satellite coverage information related to the UE;
providing fourth network indication information to the UE, in response to receiving the fourth capability indication, where the fourth indication information indicates a first time range or the first timer for the random communication, the first time range indicates a time period for performing a network communication before the loss of the satellite coverage, and the first timer indicates performing a network communication after the first timer expires; or
providing fifth network indication information to the UE, in response to receiving the fifth capability indication, where the fifth indication information indicates a second time range for the delayed communication, and the second time range indicates a time period for performing a network communication after the restoration of the satellite coverage.

Optionally, the satellite coverage information related to the UE includes at least one of:
a time that the satellite coverage is available to the UE;
a duration that the satellite coverage is available to the UE;
a time that no satellite coverage is available to the UE; or
a duration that no satellite coverage is available to the UE.

Optionally, the power-saving parameter and the NAS timer include at least one of:
an extended discontinuous reception (eDRX) parameter in a connection management idle (CM-IDLE) state;
a parameter for configuring a mobile initiated connection only (MICO) mode;
a parameter for configuring a power-saving mode (PSM) state;
a timing duration of a timer for a periodic registration;
a timing duration of a timer for a mobility reachability; or
a timing duration of a timer for an implicit deregistration.

In the technical solution, by receiving the UE capability indication of the UE for the satellite access, and providing the network indication information to the UE based on the UE capability indication, whether the UE supports the power-saving management and the mobility management in the case of the discontinuous coverage for the satellite access, and the random communication within the preset time range before the imminent loss of the satellite signal coverage and after the restoration of the satellite signal coverage are indicated, thereby avoiding a problem such as unreasonable resource consumption or network congestion of the UE in the discontinuous coverage of the satellite access network.

In a second aspect, an embodiment of the present disclosure provides a negotiation method. The method includes:
sending a UE capability indication of the UE for a satellite access to a network device; and
receiving network indication information sent by the network device, where the network indication information comprises any one of:
   first indication information, indicating that the network device supports a discontinuous coverage for the satellite access;
   second indication information, indicating that the UE provides a power-saving parameter and a NAS timer;
   third indication information, indicating that the UE provides satellite coverage information related to the UE;
   fourth indication information, indicating a first time range or a first timer for a random communication; or
   fifth indication information, indicating a second time range for a delayed communication.

Optionally, the power-saving parameter and the NAS timer is sent to the network device, and an authorization is requested from the network device, in response to the network indication information including the first indication information and/or the second indication information.

Optionally, the satellite coverage information related to the UE is sent to the network device, in response to the network indication information including the first indication information and/or the third indication information.

Optionally, in response to the network indication information including the first indication information and/or the fourth indication information, a duration of a third timer is set based on the satellite coverage information related to the UE and the first time range; or
a UE unreachable period is set based on the satellite coverage information related to the UE and the first time range, where a starting time of the UE unreachable period is within the first time range before the UE loses a satellite signal coverage; or
a duration of a third timer is set based on the satellite coverage information related to the UE and a preset time range, where the preset time range is a time range preset for the UE; or
a UE unreachable period is set based on the satellite coverage information related to the UE and a preset time range, where a starting time of the UE unreachable period is within the preset time range before the UE loses a satellite signal coverage.

Optionally, the method further includes: after setting the duration of the third timer, starting the third timer, and communicating with the network device upon an expiration of the third timer.

Optionally, the method further includes: after setting the UE unreachable period, communicating with the network device before the starting time of the UE unreachable period.

Optionally, the method further includes: in response to the network indication information including the first indication information and/or the fourth indication information, starting the first timer, and communicating with the network device upon an expiration of the first timer.

Optionally, the method further includes: in response to the network indication information including the first indication information and/or the fifth indication information, setting a duration of a second timer based on the second time range and the satellite coverage information related to the UE.

Optionally, the method further includes: after setting the duration of the second timer, starting the second timer, and communicating with the network device upon an expiration of the second timer.

Optionally, the satellite coverage information related to the UE includes at least one of:
a time that the satellite coverage is available to the UE;
a duration that the satellite coverage is available to the UE;
a time that no satellite coverage is available to the UE; or
a duration that no satellite coverage is available to the UE.

Optionally, the power-saving parameter and the NAS timer include at least one of:
an eDRX parameter in CM-IDLE;
a parameter for configuring a MICO mode;
a parameter for configuring a PSM state;
a timing duration of a timer for a periodic registration;
a timing duration of a timer for a mobility reachability; or
a timing duration of a timer for an implicit deregistration.

In a third aspect, an embodiment of the present disclosure provides a communication device. The communication device has some or all of functions of the UE for implementing the method described in the first aspect above. For example, functions of the communication device may have some or all of the functions in the embodiments of the present disclosure, or may have functions of implementing any one of the embodiments of the present disclosure alone. The functions may be implemented by hardware, or by hardware executing corresponding software. The hardware or the software includes one or more units or modules corresponding to the above functions.

In an implementation, the structure of the communication device may include a transceiving module and a processing module, and the processing module is configured to support the communication device to perform the corresponding functions in the above method. The transceiving module is configured to support communications between the communication device and other devices. The communication device may further include a storage module. The storage module is coupled to the transceiving module and the processing module, and is configured to store a computer program and data necessary for the communication device.

As an example, the processing module may be a processor, the transceiving module may be a transceiver or a communication interface, and the storage module may be a memory. In an implementation, the communication device includes:
a first transceiving module, configured to receive a UE capability indication of a UE for a satellite access, and provide network indication information to the UE based on the UE capability indication,
where the UE capability indication of the UE for the satellite access indicates at least one of the following capabilities:
   supporting a discontinuous coverage for the satellite access;
   supporting sending a power-saving parameter and a non-access stratum (NAS) timer;
   supporting sending satellite coverage information related to the UE;
   supporting a random communication before an imminent loss of a satellite coverage; or
   supporting a delayed communication after a restoration of a satellite coverage.

In a fourth aspect, an embodiment of the present disclosure provides another communication device. The communication device has some or all of functions of the UE for implementing the method described in the second aspect above. For example, functions of the communication device may have some or all of the functions in the embodiments of the present disclosure, or may have functions of implementing any one of the embodiments of the present disclosure alone. The functions may be implemented by hardware, or by hardware executing corresponding software. The hardware or the software includes one or more units or modules corresponding to the above functions.

In an implementation, the structure of the communication device may include a transceiving module and a processing module, and the processing module is configured to support the communication device to perform the corresponding functions in the above method. The transceiving module is configured to support communications between the communication device and other devices. The communication device may further include a storage module. The storage module is coupled to the transceiving module and the processing module, and is configured to store a computer program and data necessary for the communication device.

As an example, the processing module may be a processor, the transceiving module may be a transceiver or a communication interface, and the storage module may be a memory. In an implementation, the communication device includes:
a second transceiving module, configured to send a UE capability indication of the UE for a satellite access to a network device; and
a third transceiving module, configured to receive network indication information sent by the network device, where the network indication information includes any one of:
   first indication information, indicating that the network device supports a discontinuous coverage for the satellite access;
   second indication information, indicating that the UE provides a power-saving parameter and a NAS timer;
   third indication information, indicating that the UE provides satellite coverage information related to the UE;
   fourth indication information, indicating a first time range or a first timer for a random communication; or
   fifth indication information, indicating a second time range for a delayed communication.

In a fifth aspect, an embodiment of the present disclosure provides a communication device, which includes a processor. The processor is configured to execute the method described in the first aspect above, when calling a computer program in a memory.

In a sixth aspect, an embodiment of the present disclosure provides a communication device, which includes a processor. The processor is configured to execute the method described in the second aspect above, when calling a computer program in a memory.

In a seventh aspect, an embodiment of the present disclosure provides a communication device, which includes a processor and a memory. The memory is configured to store a computer program; and the processor is configured to execute the computer program stored in the memory, so as to cause the communication device to execute the method described in the first aspect above.

In an eighth aspect, an embodiment of the present disclosure provides a communication device, which includes a processor and a memory. The memory is configured to store a computer program; and the processor is configured to execute the computer program stored in the memory, so as to cause the communication device to execute the method described in the second aspect above.

In a ninth aspect, an embodiment of the present disclosure provides a communication device, which includes a processor and an interface circuit. The interface circuit is configured to receive code instructions and transmit them to the processor, and the processor is configured to run the code instructions to cause the communication device to execute the method described in the first aspect above.

In a tenth aspect, an embodiment of the present disclosure provides a communication device, which includes a processor and an interface circuit. The interface circuit is configured to receive code instructions and transmit them to the processor, and the processor is configured to run the code instructions to cause the communication device to execute the method described in the second aspect above.

In an eleventh aspect, an embodiment of the present disclosure provides a negotiation system, which includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, an embodiment of the present invention provides a computer-readable storage medium, configured to store instructions for the above-mentioned UE. The instructions, when executed, cause the UE to execute the method described in the first aspect above.

In a thirteenth aspect, an embodiment of the present invention provides a readable storage medium, configured to store instructions for the above-mentioned UE. The instructions, when executed, cause the UE to execute the method described in the second aspect above.

In a fourteenth aspect, the present disclosure further provides a computer program product including a computer program that, when executed on a computer, causes a computer to execute the method described in the first aspect above.

In a fifteenth aspect, the present disclosure further provides a computer program product including a computer program that, when executed on a computer, causes a computer to execute the method described in the second aspect above.

In a sixteenth aspect, the present disclosure provides a chip system. The chip system includes at least one processor and an interface, and is configured to support a UE to implement the functions involved in the first aspect, for example, determining or processing at least one of data or information involved in the above method. In a possible design, the chip system further includes a memory, and the memory is used to store necessary computer programs and data for the UE. The chip system may be formed by chip(s), or may include chip(s) and other discrete device(s).

In a seventeenth aspect, the present disclosure provides a chip system. The chip system includes at least one processor and an interface, and is configured to support a network device to implement the functions involved in the second aspect, for example, determining or processing at least one of data or information involved in the above method. In a possible design, the chip system further includes a memory, and the memory is used to store necessary computer programs and data for the UE. The chip system may be formed by chip(s), or may include chip(s) and other discrete device(s).

In an eighteenth aspect, the present disclosure provides a computer program that, when executed on a computer, causes the computer to execute the method described in the first aspect above.

In a nineteenth aspect, the present disclosure provides a computer program that, when executed on a computer, causes the computer to execute the method described in the second aspect above.

### BRIEF DESCRIPTION OF THE DRAWINGS

In order to more clearly illustrate technical solutions in embodiments of the present disclosure or in the background technology, the drawings required for use in the embodiments of the present disclosure or in the background technology will be described below.
FIG. 1 is a schematic diagram of an architecture of a communication system provided by an embodiment of the present disclosure.
FIG. 2 is a schematic flow chart of a negotiation method provided by an embodiment of the present disclosure.
FIG. 3 is a schematic flow chart of a negotiation method provided by an embodiment of the present disclosure.
FIG. 4 is a schematic flow chart of a negotiation method provided by an embodiment of the present disclosure.
FIG. 5 is a flow chart of another negotiation method provided by an embodiment of the present disclosure.
FIG. 6 is a schematic structural diagram of a communication device provided by an embodiment of the present disclosure.
FIG. 7 is a schematic structural diagram of another communication device provided in an embodiment of the present disclosure.
FIG. 8 is a schematic structural diagram of a chip provided in an embodiment of the present disclosure.

### DETAILED DESCRIPTION

In order to better understand the negotiation method according to embodiments of the present disclosure, a communication system to which the embodiments of the present disclosure are applicable is first described below.

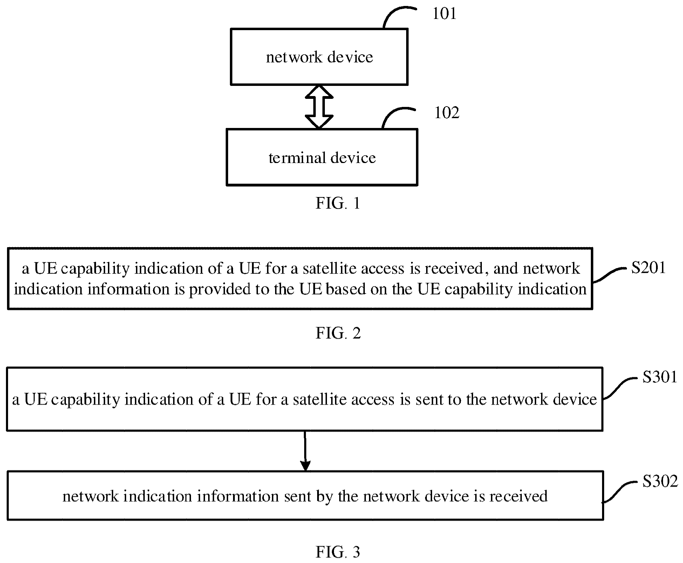

Referring to FIG. 1, FIG. 1 is a schematic diagram of an architecture of a communication system provided by an embodiment of the present disclosure. The communication system may include, but not limited to, one network device and one terminal device. The number and the form of devices shown in FIG. 1 are only used as an example and do not constitute a limitation onto the embodiments of the present disclosure. In actual applications, the system may include two or more network devices and two or more terminal devices. The communication system shown in FIG. 1 includes one network device 101 and one terminal device 102, which is taken as an example.

It should be noted that the technical solutions of the embodiments of the present disclosure may be applied to various communication systems, for example, a long term evolved (LTE) system, a 5th generation (5G) mobile communication system, a 5G new radio (NR) system, or other future new mobile communication systems. It should also be noted that a sidelink in the embodiments of the present disclosure may also be referred to as a side link or a direct communication link.

The network device 101 in the embodiments of the present disclosure is a network unit entity with a certain functionality on the network side. For example, the network device 101 may be an access and mobility management function (AMF), a mobility management entity (MME), a session management function (SMF), etc. A specific technology and a specific device form adopted by the network device are not limited by the embodiments of the present disclosure.

The terminal device 102 in the embodiments of the present disclosure is an entity on the user side for receiving or transmitting signals, such as a mobile phone. The terminal device may also be referred to as a terminal, a user equipment (UE), a mobile station (MS), a mobile terminal (MT), etc. The terminal device may be a car with communication functions, a smart car, a mobile phone, a wearable device, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in smart city, a wireless terminal device in smart home, etc. A specific technique and a specific device form used by the terminal device are not limited in the embodiments of the present disclosure.

The 5G core network supports the user terminal accessing the network via a satellite.

In a case that a network service is provided to a user based on a satellite access, the satellite access may be affected by factors such as a limited coverage range of a satellite beam and insufficient satellites in a satellite constellation, which may result in a discontinuous signal coverage to the ground. Specifically, when the user accesses a network via a satellite in a certain area, there may be a certain period where no satellite signal coverage is available. For example, after a UE obtains a satellite access signal coverage for 20 minutes, the UE may have to wait 10 hours before regaining another 20 minutes of a signal coverage.

In a case that UE performs access via a satellite network, during a period of a loss of the access coverage, the UE may enter a power-saving state, or the UE may use another available access network. Therefore, the network or the UE needs to obtain satellite coverage information, so as to determine a behavior of the UE during the period that no satellite coverage is available based on the information, including a power-saving policy parameter, etc.

In the relevant technologies, the UE may obtain the satellite coverage information, may generate the power-saving parameter according to the satellite coverage information, a UE location, a trajectory and other information, and may request the network to authorize the parameter. Alternatively, the satellite coverage information may be provided to the network, and the network generates the power-saving parameter according to the coverage information and sends it to the UE. The relevant technologies are described as follows.

If the UE can determine a time period that no satellite coverage is available to itself, and decides not to carry out any application services during the period of no coverage, the UE may trigger a mobile registration update procedure to achieve one of the following functions.

a) A parameter and a non-access stratum (NAS) timer are requested from the network, where the parameter includes a parameter for a mobile initiated connection only (MICO) mode, a parameter for an extended discontinuous reception (eDRX) in a connection management idle (CM-IDLE) state. In this way, the network device may authorize the above parameter and the NAS timer, and may return them to the UE after authorization, for a power-saving management and a mobility management for the UE when no satellite signal coverage is available.

b) When the UE is about to lose a network coverage, the UE sends a UE unreachable period to the network device. The network device generates a power-saving parameter and an NAS timer required for a power-saving management and a mobility management for the UE during the period that no satellite signal coverage is available according to the UE unreachable period, and returns them to the UE. The UE implements the power-saving management and the mobility management during the period where no satellite signal coverage is available, based on the power-saving parameter and the NAS timer.

In addition, if a signal coverage is available again for the UE in the period without any satellite signal coverage, a large number of UEs may simultaneously attempt to access the network or restore connection with the network, which will cause the large number of users to communicate with the network simultaneously in a short period, causing network congestion. In order to avoid the above situation, the network may provide the UE with information about an access waiting time range. Each UE sets a random value of a waiting timer according to the above information. When the waiting timer expires, the UE restores a communication with the network.

In the above technical implementations, there are the following issues.

In a case that a satellite access is performed by the UE in a discontinuous coverage, it remains unclear how the UE decides whether to provide the power-saving parameter or the satellite coverage information to the network, and how the UE determines when or whether the network requires the satellite coverage information related to the UE or the power-saving parameter.

The network provides the UE with the information about the access waiting time range, but it is unspecified how to handle if the UE does not support the waiting timer.

Furthermore, when a satellite signal coverage in a specified area is about to be lost, a large number of UEs may simultaneously communicate with the network, for example, sending a registration update to request a power-saving parameter in a period without any signal coverage. The large number of UEs communicating simultaneously are likely to cause network congestion, and how to prevent this remains an issue.

It may be appreciated that the communication system described in the embodiments of the present disclosure is used to more clearly illustrate the technical solutions of the embodiments of the present disclosure, and does not constitute a limitation onto the technical solutions provided by the embodiments of the present disclosure. A person skilled in the art may know that with the evolution of the system architecture and the emergence of a new service scenario, the technical solutions provided by the embodiments of the present disclosure are also applicable to similar technical problems.

The negotiation method and apparatus provided by the present disclosure will be described in detail below with reference to the accompanying drawings.

Referring to FIG. 2, FIG. 2 is a schematic flow chart of a negotiation method provided by an embodiment of the present disclosure. The method is applied to a network device. As shown in FIG. 2, the method may include, but not limited to, the following steps.

In step S201, a UE capability indication of a UE for a satellite access is received, and network indication information is provided to the UE based on the UE capability indication.

The UE capability indication of the UE for the satellite access indicates at least one of the following capabilities:
supporting a discontinuous coverage for the satellite access;
supporting sending a power-saving parameter and a non-access stratum (NAS) timer;
supporting sending satellite coverage information related to the UE;
supporting a random communication before an imminent loss of a satellite coverage; or
supporting a delayed communication after a restoration of a satellite coverage.

In this embodiment, the network device determines, based on the UE capability indication, whether the UE supports a power-saving management and a mobility management in the case of the discontinuous coverage for the satellite access, and a random communication within a preset time range before the imminent loss of the satellite coverage and after the restoration of the satellite coverage, so as to avoid unreasonable resource consumption or network congestion of the UE in the discontinuous coverage of the satellite access network. The UE capability indication of the UE for the satellite access indicates a capability supported by the UE. The network device determines the capability supported by the UE in the discontinuous coverage of the satellite signal based on the UE capability indication, and feeds back the network indication information to the UE. The network indication information indicates a behavior of the UE, so as to control the power-saving management and the mobility management of the UE in the discontinuous coverage of the satellite signal, and to control a communication within a preset time range before the imminent loss of the satellite coverage and after the restoration of the satellite coverage.

The NAS timer is mainly used to control sending of a registration update message. Theoretically, when the NAS timer expires, the registration update message should be sent to the network device. However, in order to avoid congestion, the transmission is also contingent upon the expiration of a UE unreachable period, or a first timer, or a second timer, or a third timer.

The power-saving parameter are various parameters for the UE, which are used to control the power-saving management of the UE during a period that no satellite signal coverage is available, so as to conserve electric energy, prevent unnecessary consumption, and extend the battery life of the UE.

The random communication is that the UE randomly initiates a communication with the network within a preset time range before the imminent loss of the satellite signal coverage, which disperses communication starting times of a large number of UEs in the same area within the preset time range, thereby preventing network congestion.

The delayed communication is that the UE randomly initiates a communication with the network within a preset time range after the restoration of the satellite signal coverage, which disperses communication starting times of a large number of UEs in the same area within the preset time range, thereby preventing network congestion.

The network device in the embodiments of the present disclosure is a network unit entity with a certain functionality on the network side. For example, the network device 101 may be an access and mobility management function (AMF), a mobility management entity (MME), a session management function (SMF), etc. A specific technology and a specific device form adopted by the network device are not limited by embodiments of the present disclosure.

Optionally, the network device is the AMF or the MME, and information (such as the UE capability indication of the UE for the satellite access) sent between the UE and the AMF is forwarded by a base station. The AMF is responsible for performing a registration, a connection, a reachability management and a mobility management, provides a session management message transmission channel for the UE and the SMF, provides authentication and authorization functions for a user access, and serves as a control plane access point for the UE and a wireless core network.

The MME is a key control node in a LTE access network in 3GPP protocols. The MME is responsible for positioning of a UE in an idle mode, and a paging process including relay. In general, the MME is responsible for signaling processing. The MME includes the following functions: access control including security and admission control; mobility management; attachment and detachment; and session management function.

In this embodiment, by receiving the UE capability indication of the UE for the satellite access, and providing the network indication information to the UE based on the UE capability indication, whether the UE supports the power-saving management and the mobility management in the case of the discontinuous coverage for the satellite access, and the random communication within the preset time range before the imminent loss of the satellite signal coverage and after the restoration of the satellite signal coverage are indicated, thereby avoiding a problem such as unreasonable resource consumption or network congestion of the UE in the discontinuous coverage of the satellite access network.

Optionally, the UE capability indication of the UE for the satellite access includes at least one of:
a first capability indication, indicating that the UE supports the discontinuous coverage for the satellite access, or that the discontinuous coverage is provided by a satellite network accessed by the UE;
a second capability indication, indicating that the UE supports providing power-saving parameter calculation;
a third capability indication, indicating that the UE supports providing the satellite coverage information related to the UE;
a fourth capability indication, indicating that the UE supports the random communication based on a first timer or before the imminent loss of the satellite coverage, where the first timer is used to control a communication between the UE and the network device before the imminent loss of the satellite coverage; or
a fifth capability indication, indicating that the UE supports the delayed communication based on a second timer or after the restoration of the satellite coverage, where the second timer is used to control a communication between the UE and the network device after the same satellite coverage is restored.

Optionally, the receiving the UE capability indication from the UE for the satellite access, and providing the network indication information to the UE based on the UE capability indication includes at least one of:
providing first network indication information to the UE, in response to receiving the first capability indication, where the first indication information indicates that the network device supports the discontinuous coverage for the satellite access;
providing second network indication information to the UE, in response to receiving the second capability indication, where the second indication information indicates that the UE provides the power-saving parameter and the NAS timer;
providing third network indication information to the UE, in response to receiving the third capability indication, where the third indication information indicates that the UE provides the satellite coverage information related to the UE;
providing fourth network indication information to the UE, in response to receiving the fourth capability indication, where the fourth indication information indicates a first time range or the first timer for the random communication, the first time range indicates a time period for performing a network communication before the loss of the satellite coverage, and the first timer indicates performing a network communication after the first timer expires; or
providing fifth network indication information to the UE, in response to receiving the fifth capability indication, where the fifth indication information indicates a second time range for the delayed communication, and the second time range indicates a time period for performing a network communication after the restoration of the satellite coverage.

Optionally, the network device is the AMF or the MME, and the AMF or the MME receives the UE capability indication of the UE for the satellite access sent by the UE and forwarded by the base station, and after the network device generates the network indication information, the network indication information is forwarded to the UE by the base station.

Optionally, the satellite coverage information related to the UE includes at least one of the following information:
a time that the satellite coverage is available to the UE;
a duration that the satellite coverage is available to the UE;
a time that no satellite coverage is available to the UE; or
a duration that no satellite coverage is available to the UE.

In this embodiment, the satellite coverage information indicates a time period during which a communication of the UE is in the satellite coverage, and a time period during which the communication of the UE is not in the satellite coverage. Based on the above information, the network device may determine whether the satellite coverage is available to the UE.

Optionally, the power-saving parameter and the NAS timer include at least one of:
an extended discontinuous reception (eDRX) parameter in a connection management idle (CM-IDLE) state;
a parameter for configuring a mobile initiated connection only (MICO) mode;
a parameter for configuring a power-saving mode (PSM) state;
a timing duration of a timer for a periodic registration;
a timing duration of a timer for a mobility reachability; or
a timing duration of a timer for an implicit deregistration.

In this embodiment, there are two states for a signaling connection between the UE and the network device, namely, the CM-IDLE state and a connection management connected (CM-CONNECTED) state. When a connection state between the UE the network device is the CM-IDLE state, it means that the UE has not established a NAS signaling connection with the AMF on an N1 interface, and has not established an access network signaling connection, namely, an N2 connection, and an N3 connection. Each time when the N2 connection is established for the UE between the satellite and the network device, the network device will enter the CM-CONNECTED state with the UE. Upon receipt of an initial N2 message, the network device will switch from the CM-IDLE state to the CM-CONNECTED state.

In a case that the UE is in the CM-IDLE state and a RM-REGISTERED state at the same time, when receiving a paging message, the UE may respond to paging by executing a service request procedure; and when the UE needs to send an uplink signaling or uplink user data, the UE will also execute the service request procedure.

The eDRX is configured with a longer paging cycle, which enables the UE to reduce power consumption, but to increase downlink data latency. The module can only monitor a paging channel according to a DRX cycle within a paging time window (PTW) to receive a downlink service; and during a time period outside the PTW, it is in a sleep state, does not monitor the paging channel, and cannot receive any downlink service. The eDRX parameter includes the PTW.

In a case that the UE is in the MICO mode and in the CM-IDLE state, only the UE can initiate a service request to establish a connection. When receiving downlink data or a downlink message, the network device will not page the UE, to cause the UE to prompt connection establishment, and the UE in the MICO mode will not respond. The network may only send the downlink data or the downlink message to the UE when the UE is in the CM-CONNECTED state. The UE in the MICO mode does not initiate a service request procedure in response to network paging.

The principle of the PSM is to allow the UE to disable signal transceiving and access stratum related functions after remaining idle for a time period, thereby reducing power consumption from an antenna, a radio frequency, signaling processing, etc. During the PSM, the UE does not receive any network paging, including a cell search message, a cell reselection, etc. For the network device, the UE is unreachable at this time and no longer receives the downlink data.

In the PSM mode, the UE stops monitoring paging but remains registered with the network. Therefore, no connection or reconnection establishment is required when data needs to be sent. After entering the PSM mode, the UE can still actively send uplink data to a platform.

By sending the power-saving parameter(s) (at least one of the eDRX parameter, the MICO mode parameter in the CM-IDLE state, or the PSM parameter) and the NAS timer (a timer for periodic registration update) to the UE, the parameter(s) required for the power-saving management and the mobility management during the time period without the satellite coverage can be provided to the UE, thereby conserving energy of the UE and avoiding unreasonable UE resource consumption.

Referring to FIG. 3, FIG. 3 is a flow chart of a negotiation method provided by an embodiment of the present disclosure. The method is applied to a UE. As shown in FIG. 3, the method may include, but not limited to, the following steps.

In step S301, a UE capability indication of a UE for a satellite access is sent to a network device.

In step S302, network indication information sent by the network device is received, where the network indication information includes any one of:
first indication information, indicating that the network device supports a discontinuous coverage for the satellite access;
second indication information, indicating that the UE provides a power-saving parameter and a NAS timer;
third indication information, indicating that the UE provides satellite coverage information related to the UE;
fourth indication information, indicating a first time range or a first timer for a random communication; or
fifth indication information, indicating a second time range for a delayed communication.

In this embodiment, the UE sends the UE capability indication of the UE for the satellite access, where the UE capability indication of the UE for the satellite access indicates a capability supported by the UE.

The network device makes a determination based on the capability of the UE, and determines whether the UE utilizes the satellite access providing the discontinuous coverage, and a processing capability supported in the case of the discontinuous satellite signal coverage based on the UE capability indication, and then feeds back the network indication information to the UE. The network indication information guides a behavior of the UE, so as to control the behavior of the UE where the satellite signal coverage is not available, and a communication after the satellite coverage is restored.

In this embodiment, by receiving the UE capability indication of the UE for the satellite access, and providing the network indication information to the UE based on the UE capability indication, whether the UE supports a power-saving management and a mobility management in the case of the discontinuous coverage for the satellite access, and the random communication within a preset time range before an imminent loss of the satellite signal coverage and after a restoration of the satellite signal coverage are indicated, thereby avoiding a problem such as unreasonable resource consumption or network congestion of the UE in the discontinuous coverage of the satellite access network.

Optionally, the power-saving parameter and the NAS timer are sent to the network device, and an authorization is requested from the network device, in response to the network indication information including the first indication information and/or the second indication information.

Optionally, the satellite coverage information related to the UE is sent to the network device, in response to the network indication information including the first indication information and/or the third indication information.

Optionally, in response to the network indication information including the first indication information and/or the fourth indication information, a duration of a third timer is set based on the satellite coverage information related to the UE and the first time range; or
a UE unreachable period is set based on the satellite coverage information related to the UE and the first time range, where a starting time of the UE unreachable period is within the first time range before the UE loses a satellite signal coverage; or
a duration of a third timer is set based on the satellite coverage information related to the UE and a preset time range, where the preset time range is a time range preset for the UE; or
a UE unreachable period is set based on the satellite coverage information related to the UE and a preset time range, where a starting time of the UE unreachable period is within the preset time range before the UE loses a satellite signal coverage.

In this embodiment, the UE supports the random communication before an imminent loss of the satellite coverage, and the fourth indication information indicates the first time range or the first timer for the random communication.

The first time range indicates a time period for performing a network communication before the loss of the satellite coverage. A duration of the third timer is set according to the first time range, to facilitate determining that the UE communicates with the network after the third timer expires.

The UE may set the UE unreachable period based on the satellite coverage information related to the UE and the first time range, and may determine that the UE communicates with the network before the unreachable period begins.

The UE may also set the duration of the third timer based on the satellite coverage information related to the UE and the preset time range. The preset time range is the time range preset for the UE, and an implementer may set the preset time range according to the actual implementation requirements.

The UE may set the UE unreachable period based on the satellite coverage information related to the UE and the preset time range. The starting time of the UE unreachable period is within the preset time range before the UE loses the satellite signal coverage, so that the UE enters an unreachable state before the loss of the satellite signal coverage, and the UE is in a power-saving state.

Optionally, the method further includes: after setting the duration of the third timer, starting the third timer, and communicating with the network device upon an expiration of the third timer.

In this embodiment, after the duration of the third timer is set, the third timer may be started for counting, and upon the expiration of the timer, the UE communicates with the network device.

Optionally, the method further includes: after setting the UE unreachable period, communicating with the network device before the starting time of the UE unreachable period.

In this embodiment, before the starting time of the UE unreachable period, the UE remains within the satellite signal coverage and may maintain a communication with the network device.

Optionally, the method further includes: in response to the network indication information including the first indication information and/or the fourth indication information, starting the first timer, and communicating with the network device upon an expiration of the first timer.

In this embodiment, the UE receives the fourth indication information indicating the first timer, and the duration of the first timer is indicated by the network device. The first timer is started, and the UE communicates with the network device upon the expiration of the first timer.

In this embodiment, communications between multiple UEs and the network device are dispersed within the preset time range before the loss of the satellite coverage based on the first timer and the third timer.

Optionally, the method further includes: in response to the network indication information including the first indication information and/or the fifth indication information, setting a duration of a second timer based on the second time range and the satellite coverage information related to the UE.

In this embodiment, the UE supports the delayed communication after the satellite coverage is restored. The fifth indication information indicates the second time range for the delayed communication. The duration of the second timer may be set based on the second time range and the satellite coverage information related to the UE.

Optionally, the method further includes: after setting the duration of the second timer, starting the second timer, and communicating with the network device upon an expiration of the second timer.

In this embodiment, the second time range indicates a time range for the delayed communication after the restoration of the satellite coverage. The expiration of the second timer indicates that the UE re-enters a satellite signal coverage and may communicate with the network device again.

Optionally, the satellite coverage information related to the UE includes at least one of:
a time that the satellite coverage is available to the UE;
a duration that the satellite coverage is available to the UE;
a time that no satellite coverage is available to the UE; or
a duration that no satellite coverage is available to the UE.

Optionally, the power-saving parameter and the NAS timer include at least one of the following information:
an eDRX parameter in CM-IDLE;
a parameter for configuring a MICO mode;
a parameter for configuring a PSM state;
a timing duration of a timer for a periodic registration;
a timing duration of a timer for a mobility reachability; or
a timing duration of a timer for an implicit deregistration.

In a possible embodiment, in a case that the UE supports the discontinuous coverage for the satellite access, or the satellite network accessed by the UE provides the discontinuous coverage, then the UE generates first capability indication information and sends it to the network device. The network device generates the network indication information including first indication information according to the first capability indication information, and feeds it back to the UE. The first indication information indicates that the network supports the discontinuous coverage for the satellite access. The UE may determine that the network also supports the discontinuous coverage for the satellite access according to the network indication information.

In a possible embodiment, in a case that the UE supports providing power-saving parameter calculation, then the UE generates second capability indication information and sends it to the network device. The network indication information generated by the network device according to the second capability indication information includes second indication information, and the network indication information is fed back to the UE. The second indication information indicates that the UE provides the power-saving parameter and the NAS timer. The UE may determine that the power-saving parameter and the NAS timer need to be provided to the network device according to the network indication information, so as to perform a power-saving management and a mobility management in the case of the satellite access with the discontinuous coverage.

In a possible embodiment, in a case that the UE supports providing the satellite coverage information related to the UE, then the UE generates third capability indication information and sends it to the network device. The network indication information generated by the network device according to the third capability indication information includes third indication information, and the network indication information is fed back to the UE. The third indication information indicates that the UE provides the satellite coverage information related to the UE. The UE may determine that the satellite coverage information related to the UE needs to be provided to the network device according to the network indication information, so as to perform the power-saving management and the mobility management in the case of the satellite access with the discontinuous coverage.

In a case that the network indication information received by the UE includes the first indication information and/or the second indication information, it may be determined that the network device supports the discontinuous coverage for the satellite access, and the UE is required to provide the power-saving parameter and the NAS timer. In this case, the UE may calculate and obtain at least one of the following information:
an eDRX parameter in CM-IDLE state;
a parameter for configuring a MICO mode;
a parameter for configuring a PSM state;
a timing duration of the NAS timer (a timer for a periodic registration update);
a timing duration of a timer for a mobility reachability; or
a timing duration of a timer for an implicit deregistration.

The above information is fed back to the network device, requesting the network device to authorize the information, so as to perform the power-saving management and the mobility management in the case of the discontinuous coverage for the satellite access.

In a case that the network indication information received by the UE includes the first indication information and/or the third indication information, it may be determined that the network device supports the discontinuous coverage for the satellite access, and the UE is required to provide the satellite coverage information related to the UE. The UE needs to send the satellite coverage information related to the UE to the network device, so as to enable the network device to confirm at least one of the following information:
a time that the satellite coverage is available to the UE;
a duration that the satellite coverage is available to the UE;
a time that no satellite coverage is available to the UE; or
a duration that no satellite coverage is available to the UE.

In a possible embodiment, in a case that the UE supports the random communication based on the first timer or before the imminent loss of the satellite coverage signal, the UE will generate fourth capability indication information and send it to the network device. Alternatively, the UE sends the first capability indication information to the network device, and the first capability indication information indicates that the UE supports the discontinuous coverage for the satellite access, that is, supporting the random communication before the loss of the satellite coverage signal. The network device generates the network indication information including the fourth indication information based on the first capability indication information and/or the fourth capability indication information and feeds it back to the UE. The fourth indication information indicates the first time range or the first timer for the random communication.

In a case that the network indication information received by the UE includes the first indication information and/or the fourth indication information, it may be determined that the network device supports the discontinuous coverage for the satellite access, and the network device instructs the UE to set a timer. The UE may set the third timer or the unreachable period for a communication in the case of the satellite access with the discontinuous coverage, and the setting step includes any one of:
setting the duration of the third timer based on the satellite coverage information related to the UE and the first time range; or
setting the UE unreachable period based on the satellite coverage information related to the UE and the first time range, where the starting time of the UE unreachable period is within the first time range before the UE loses the satellite signal coverage; or
setting the duration of the third timer based on the satellite coverage information related to the UE and the preset time range, where the preset time range is the time range preset for the UE; or
setting the UE unreachable period based on the satellite coverage information related to the UE and the preset time range, where the starting time of the UE unreachable period is within the preset time range before the UE loses the satellite signal coverage.

In a case that the duration of the third timer is set by the UE, the third timer is started after the setting is completed, and a communication is performed with the network device upon the expiration of the third timer.

In a case that the unreachable period is set by the UE, after the setting is completed, the UE communicates with the network device before the starting time of the unreachable period.

In a possible embodiment, the UE may also directly start the first timer after obtaining the first timer in the fourth indication information, and may communicate with the network device upon the expiration of the first timer.

In a possible embodiment, in a case that the UE supports the delayed communication based on the second timer or after the restoration of the satellite coverage, the UE generates fifth capability indication information and sends it to the network device. Alternatively, the UE sends the first capability indication information to the network device, and the first capability indication information indicates that the UE supports the discontinuous coverage for the satellite access, i.e., supporting the delayed communication after the restoration of the coverage signal. The network device generates the network indication information including the fifth indication information based on the first capability indication information and/or the fifth capability indication information, and feeds it back to the UE. The fifth indication information indicates the second time range for the delayed communication.

In a case that the network indication information received by the UE includes the first indication information and/or the fifth indication information, it may be determined that the network device supports the discontinuous coverage for the satellite access, and the network device instructs the UE to set a timer. The UE sets the duration of the second timer according to the second time range and the satellite coverage information related to the UE. After the setting is completed, the second timer is started, and a communication is performed with the network device upon the expiration of the second timer.

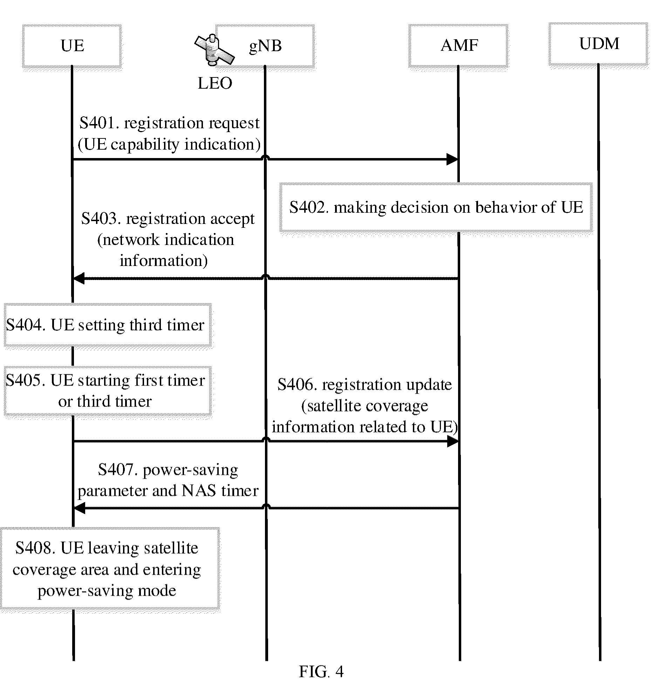

Referring to FIG. 4, FIG. 4 is a flow chart of a negotiation method provided by an embodiment of the present disclosure, for negotiating whether a UE supports a random communication within a preset time range before an imminent loss of a satellite coverage. As shown in FIG. 4, the method may include, but not limited to, the following steps.

In step S401, the UE accesses an AMF (network device) via a satellite and initiates a registration request, where a registration request message includes a UE capability indication of the UE for a satellite access. The indication information indicates the following capability:
whether the UE supports a discontinuous coverage for the satellite access; or
whether the UE supports the random communication before the imminent loss of the satellite coverage.

If the UE supports the above capability, the network device provides corresponding indication information. If the UE does not provide indication information, it is considered that the UE does not support the corresponding capability.

In step S402, the AMF makes a decision based on the indication information received from the UE and capability information of the AMF (for example, whether the network supports the discontinuous coverage of the satellite network) to determine a behavior of the UE.

The behavior of the UE includes:
first indication information, indicating that the network device supports the discontinuous coverage for the satellite access; or
fourth indication information, indicating a first time range or a first timer for the random communication, where the first time range indicates a time period for performing a network communication before the loss of the satellite coverage, and the first timer indicates performing a network communication after the first timer expires. The duration of the first timer is set to enable an expiration time point of the duration of the first timer to be within the time range.

In step S403, the AMF returns a registration acceptance message to the UE, including network indication information.

In step S404, the UE receives the network indication information.

In a case that the network indication information is the first indication information, it indicates that the network also supports a discontinuous coverage of the satellite, which by default implies that both the UE and the network support the random communication before the loss of the satellite coverage and a delayed communication after a restoration of the satellite coverage. The UE may set a third timer according to the preset time range.

In a case that the network indication information is the fourth indication information, and the fourth indication information indicates a time range, the UE sets a duration of a third timer or a UE unreachable period according to satellite coverage information related to the UE and the time range, to enable that the duration of the third timer expires within the time range, or the starting time of the UE unreachable period is within the time range.

The satellite coverage information related to the UE includes at least one of: a time period when a signal coverage is available to the UE (i.e., a starting time and a duration that the satellite coverage is available), a time period when no signal coverage is available to the UE (i.e., a starting time and a duration that the satellite coverage is not available).

In step S405, the UE starts the first timer or the third timer according to steps S403 and S404.

In step S406, in a case that the first timer or the third timer expires, or the first timer or the third timer is not configured, it is determined that the UE unreachable period is about to begin, and the UE learns the imminent loss of the satellite coverage, and initiates a registration update request to the network, which includes the satellite coverage information related to the UE, or information about the UE unreachable period.

In step S407, the AMF sets a power-saving parameter and an NAS timer according to the satellite coverage information related to the UE or the UE unreachable period, and returns the same to the UE.

In step S408, when the UE enters a period without any satellite coverage, the UE maintains a power-saving state according to the power-saving parameter, so as to reduce power consumption of the UE.

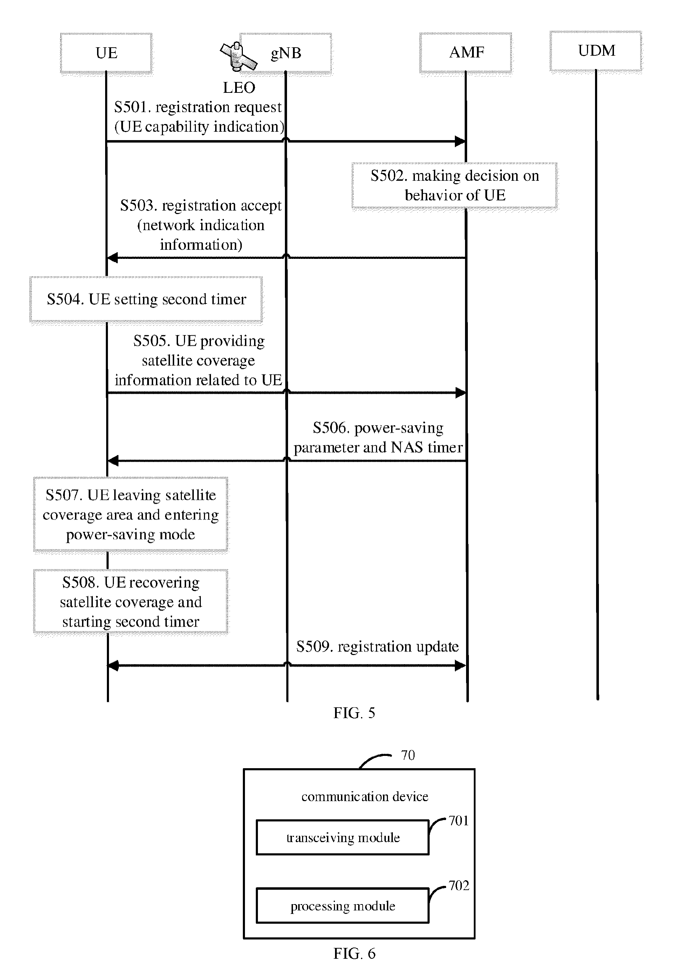

Referring to FIG. 5, FIG. 5 is a flow chart of another negotiation method provided by an embodiment of the present disclosure, for negotiating whether a UE supports a delayed communication within a preset time range after a restoration of a satellite coverage. As shown in FIG. 5, the method may include, but not limited to, the following steps.

In step S501, the UE accesses an AMF (network device) via a satellite and initiates a registration request, where a registration request message includes a UE capability indication of a UE for a satellite access. The indication information indicates the following capability:
whether the UE supports a discontinuous coverage for the satellite access; or
whether the UE supports the delayed communication after the restoration of the satellite coverage.

If the UE supports the above capability, the network device provides corresponding indication information. If the UE does not provide indication information, it is considered that the UE does not support the corresponding capability.

In step S502, the AMF makes a decision based on the indication information received from the UE and capability information of the AMF (for example, whether the network supports the discontinuous coverage of the satellite network) to determine a behavior of the UE.

The behavior of the UE includes:
first indication information, indicating that the network device supports the discontinuous coverage for the satellite access; or
fifth indication information, indicating a second time range for the delayed communication, where the second time range indicates a time period for the delayed network communication after the restoration of the satellite coverage.

In step S503, the AMF returns a registration acceptance message to the UE, including network indication information.

In step S504, the UE receives the network indication information.

The first indication information indicates that the network also supports the discontinuous coverage of the satellite, which by default implies that both the UE and the network support a random communication before an imminent loss of the satellite coverage and the delayed communication after the restoration of the satellite coverage.

The fourth indication information indicates a time range, and the UE sets a duration of a second timer according to satellite coverage information related to the UE and the time range, to enable that the duration of the second timer expires within the time range.

The satellite coverage information related to the UE includes at least one of: a time period when a signal coverage is available to the UE (i.e., a starting time and a duration that the satellite coverage is available), a time period when no signal coverage is available to the UE (i.e., a starting time and a duration that the satellite coverage is not available).

In step S505, before the UE is about to lose the network coverage, the UE sends a registration update request to the network, which includes the satellite coverage information related to the UE or information about a UE unreachable period.

In step S506, the AMF sets a power-saving parameter and an NAS timer according to the satellite coverage information related to the UE or the UE unreachable period, and returns the same to the UE.

In step S507, in a period without the satellite coverage, the UE maintains a power-saving state according to the power-saving parameter, so as to reduce power consumption of the UE.

In step S508, when the UE exits the power-saving state according to the power-saving parameter, it is ensured that the UE recovers a satellite signal coverage and starts the second timer.

In step S509, when the second timer expires, the UE initiates a communication to the network, for example, initiating a registration update.

In the above embodiments provided by the present disclosure, the methods provided by the embodiments of the present disclosure are introduced from the perspectives of the network device and the UE, respectively. To implement functions in the methods provided by the above embodiments of the present disclosure, the network device and the UE may include a hardware structure and a software module, and the above functions may be implemented in a form of the hardware structure, the software module, or the hardware structure plus the software module. One of the above functions may be executed in the form of the hardware structure, the software module, or the hardware structure plus the software module.

Referring to FIG. 6, FIG. 6 is a schematic structural diagram of a communication device 70 provided by an embodiment of the present disclosure. The communication device 70 shown in FIG. 6 may include a transceiving module 701 and a processing module 702. The transceiving module 701 may include a sending module and/or a receiving module. The sending module is configured to implement a sending function, the receiving module is configured to implement a receiving function, and the transceiving module 701 may implement the sending function and/or the receiving function.

The communication device 70 may be a UE (such as the UE in the aforementioned method embodiments), or a device in a UE, or a device that can be used in conjunction with a UE. Alternatively, the communication device 70 may be a network device, or a device in a network device, or a device that may be used in conjunction with a network device.

In a case that the communication device 70 is the UE, it includes:
a second transceiving module, configured to send a UE capability indication of the UE for a satellite access to a network device; and
a third transceiving module, configured to receive network indication information sent by the network device, where the network indication information includes any one of:
   first indication information, indicating that the network device supports a discontinuous coverage for the satellite access;
   second indication information, indicating that the UE provides a power-saving parameter and a NAS timer;
   third indication information, indicating that the UE provides satellite coverage information related to the UE;
   fourth indication information, indicating a first time range or a first timer for a random communication; or
   fifth indication information, indicating a second time range for a delayed communication.

In a case that the communication device 70 is the network device, it includes:
a first transceiving module, configured to receive a UE capability indication of a UE for a satellite access, and provide network indication information to the UE based on the UE capability indication,
where the UE capability indication of the UE for the satellite access indicates at least one of the following capabilities:
   supporting a discontinuous coverage for the satellite access;
   supporting sending a power-saving parameter and a non-access stratum (NAS) timer;
   supporting sending satellite coverage information related to the UE;
   supporting a random communication before an imminent loss of a satellite coverage; or
   supporting a delayed communication after a restoration of a satellite coverage.

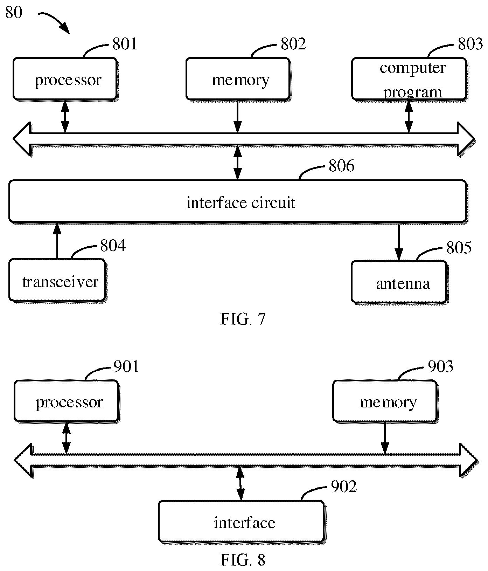

Referring to FIG. 7, FIG. 7 is a schematic structural diagram of another communication device 80 provided by an embodiment of the present disclosure. The communication device 80 may be a network device, or a UE (such as the UE in the aforementioned method embodiments), or a chip, a chip system, or a processor that supports the network device to implement the above method, or a chip, a chip system, or a processor that supports the UE to implement the above method. The device may be configured to implement the method described in the above method embodiments, and reference can be made to the descriptions in the above method embodiments for details.

The communication device 80 may include one or more processors 801. The processor 801 may be a general-purpose processor or a dedicated processor, etc. For example, it may be a baseband processor or a central processing unit. The baseband processor may be configured to process communication protocols and communication data, and the central processing unit may be configured to control the communication device (such as a base station, a baseband chip, a UE, a chip of the UE, a DU or a CU, etc.), execute a computer program, and process the data of the computer program.

Optionally, the communication device 80 may further include one or more memories 802, on which a computer program 803 may be stored. The processor 801 is configured to execute the computer program 803, so as to cause the communication device 80 to perform the method described in the above method embodiments. Optionally, data may also be stored in the memory 802. The communication device 80 and the memory 802 may be provided separately or integrated together.

Optionally, the communication device 80 may further include a transceiver 804 and an antenna 805. The transceiver 804 may be referred to as a transceiver unit, a transceiving module, or a transceiver circuit, etc., and is configured to implement a transceiver function. The transceiver 804 may include a receiver and a transmitter, the receiver may be referred to as a receiver or a receiving circuit, etc., and is configured to implement a receiving function; the transmitter may be referred to as a transmitter or a transmitting circuit, etc., and is configured to implement a transmitting function.

Optionally, the communication device 80 may further include one or more interface circuits 806. The interface circuit 806 is configured to receive code instructions and transmit them to the processor 801. The processor 801 is configured to run the code instructions, so as to enable the communication device 80 to perform the method described in the above method embodiments.

In a case that the communication device 80 is a UE, the transceiver 804 is configured to execute steps S301 and S302 in FIG. 3.

In a case that the communication device 80 is a network device, the transceiver 804 is configured to execute step S201 in FIG. 2.

In an implementation, the processor 801 may include a transceiver for implementing receiving and transmitting functions. For example, the transceiver may be a transceiver circuit, an interface, or an interface circuit. The transceiver circuits, interfaces or interface circuits configured to implement the receiving and transmitting functions can be arranged separately, or integrated together. The above transceiver circuit, interface or interface circuit can be configured to read and write codes/data, or the above transceiver circuit, interface or interface circuit can be used for signal transmission or transfer.

In an implementation, the processor 801 may store a computer program 803, and the computer program 803 is executed by the processor 801 to cause the communication device 80 to perform the method described in the above method embodiments. The computer program 803 may be solidified in the processor 801, in which case the processor 801 may be implemented by hardware.

In an implementation, the communication device 80 may include a circuit, which may implement functions of transmitting or receiving or communicating in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), electronic equipment, etc. The processor and the transceiver may also be manufactured using various IC process technologies, such as complementary metal oxide semiconductor (CMOS), N-type Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network-side device or a UE (the UE in the above embodiments), but the scope of the communication device described in the present disclosure is not limited thereto. The structure of the communication device may not be limited by FIG. 7. The communication device may be a stand-alone device or may be a part of a larger device. For example, the communication device may be:
(1) an independent integrated circuit (IC), or a chip, or a chip system or a subsystem;
(2) a collection of one or more ICs, where, optionally, the IC collection may also include a storage component for storing data and computer programs;
(3) ASIC, such as Modem;
(4) a module that can be embedded into other devices;
(5) a receiver, a terminal, an intelligent terminal, a cellular phone, a wireless equipment, a handheld device, a mobile unit, a vehicle-mounted equipment, a network-side device, a cloud equipment, an artificial intelligence equipment, etc.; or
(6) other component(s), etc.

For the case where the communication device may be a chip or a chip system, reference can be made to the schematic structural diagram of the chip shown in FIG. 8. The chip shown in FIG. 8 includes a processor 901 and interfaces 902. The number of the processor 901 may be one or more, and the number of the interfaces 902 may be multiple.

Optionally, the chip further includes a memory 903, and the memory 903 is configured to store a necessary computer program and data.

Those skilled in the art can also appreciate that various illustrative logical blocks and steps listed in the embodiments of the present disclosure can be implemented by electronic hardware, computer software, or a combination of both. Whether such functionality is implemented in hardware or software depends on the particular application and overall system design requirements. Those skilled in the art can use various methods to implement the described functions for each particular application, but such implementation should not be understood as exceeding the scope of protection of the embodiments of the present disclosure.

An embodiment of the present disclosure further provide a negotiation system. The system includes the communication device in the embodiment of FIG. 6 as a UE (such as the UE in the embodiments of the method described above) and a communication device as a network device, or the system includes the communication device in the embodiment of FIG. 7 as a UE (such as the UE in the embodiments of the method described above) and a communication device as a network device.

The present disclosure further provides a readable storage medium, on which instructions are stored. When the instructions are executed by a computer, functions in any of the above method embodiments are implemented.

The present disclosure further provides a computer program product. The computer program product is executed by a computer to implement functions in any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device(s). The computer program may be stored in a computer-readable storage medium, or transferred from one computer-readable storage medium to another computer-readable storage medium. For example, the computer program may be transferred from a website, a computer, a server, or a data center to another website, another computer, another server or another data center through wired means (such as coaxial cable, optical fiber, digital subscriber line (DSL)), or wireless means (such as infrared, wireless, microwave, etc.). The computer-readable storage medium may be any available medium that can be accessed by a computer, or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that the first, second, and other numerical numbers involved in the present disclosure are only for convenience of description, and are not used to limit the scope of the embodiments of the present disclosure, or to indicate the order.

At least one in the present disclosure may also be described as one or more, and the plurality may be two, three, four or more, which are not limited by the present disclosure. In the embodiments of the present disclosure, technical features are distinguished by terms "first", "second", "third", "A", "B", "C", "D", etc. The technical features described by the terms "first", "second", "third", "A", "B", "C", "D" are not in an order of precedence or in an order of size.

The correspondence shown in each table in the present disclosure can be configured or predefined. The values of the information in each table are only for example and can be configured as other values, which is not limited by the present disclosure. In configuring the correspondence between information and each parameter, it is not necessarily required to configure all the correspondences shown in each table. For example, in the table of the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefine" in the present disclosure may be understood as define, define in advance, store, pre-store, pre-negotiate, pre-configure, solidify, or pre-burn.

Those of ordinary skill in the art will appreciate that units and algorithm steps of each example described in conjunction with the embodiments disclosed herein can be implemented by electronic hardware, or a combination of computer software and electronic hardware. Whether these functions are performed by hardware or software depends on the specific application and design constraints of the technical solution. Those of ordinary skill in the art may implement the described functionality using different methods for each specific application, but such implementations should not be considered as exceeding the scope of the present disclosure.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific embodiments of the present disclosure, but the protection scope of the present disclosure is not limited thereto. Any person familiar with the technical field can easily think of changes or substitutions within the technical scope disclosed in the present disclosure, all of which shall fall within the protection scope of the present disclosure. Therefore, the protection scope of the present disclosure should be subject to the protection scope of the claims.

## Claims

1. A negotiation method, applied to a network device, comprising:
receiving a user equipment (UE) capability indication of a UE for a satellite access, and providing network indication information to the UE based on the UE capability indication,
wherein the UE capability indication of the UE for the satellite access indicates at least one of the following capabilities:
supporting a discontinuous coverage for the satellite access;
supporting sending a power-saving parameter and a non-access stratum (NAS) timer;
supporting sending satellite coverage information related to the UE;
supporting a random communication before an imminent loss of a satellite coverage; or
supporting a delayed communication after a restoration of a satellite coverage.

2. The method according to claim 1, wherein the UE capability indication of the UE for the satellite access comprises at least one of:
a first capability indication, indicating that the UE supports the discontinuous coverage for the satellite access, or that the discontinuous coverage is provided by a satellite network accessed by the UE;
a second capability indication, indicating that the UE supports providing power-saving parameter calculation;
a third capability indication, indicating that the UE supports providing the satellite coverage information related to the UE;
a fourth capability indication, indicating that the UE supports the random communication based on a first timer or before the imminent loss of the satellite coverage, wherein the first timer is used to control a communication between the UE and the network device before the imminent loss of the satellite coverage; or
a fifth capability indication, indicating that the UE supports the delayed communication based on a second timer or after the restoration of the satellite coverage, wherein the second timer is used to control a communication between the UE and the network device after the same satellite coverage is restored.

3. The method according to claim 2, wherein receiving the UE capability indication of the UE for the satellite access, and providing the network indication information to the UE based on the UE capability indication comprises at least one of:
providing first network indication information to the UE, in response to receiving the first capability indication, wherein the first indication information indicates that the network device supports the discontinuous coverage for the satellite access;
providing second network indication information to the UE, in response to receiving the second capability indication, wherein the second indication information indicates that the UE provides the power-saving parameter and the NAS timer;
providing third network indication information to the UE, in response to receiving the third capability indication, wherein the third indication information indicates that the UE provides the satellite coverage information related to the UE;
providing fourth network indication information to the UE, in response to receiving the fourth capability indication, wherein the fourth indication information indicates a first time range or the first timer for the random communication, the first time range indicates a time period for performing a network communication before the loss of the satellite coverage, and the first timer indicates performing a network communication after the first timer expires; or
providing fifth network indication information to the UE, in response to receiving the fifth capability indication, wherein the fifth indication information indicates a second time range for the delayed communication, and the second time range indicates a time period for performing a network communication after the restoration of the satellite coverage.

4. The method according to any one of claims 1 to 3, wherein the satellite coverage information related to the UE comprises at least one of:
a time that the satellite coverage is available to the UE;
a duration that the satellite coverage is available to the UE;
a time that no satellite coverage is available to the UE; or
a duration that no satellite coverage is available to the UE.

5. The method according to any one of claims 1 to 3, wherein the power-saving parameter and the NAS timer comprise at least one of:
an extended discontinuous reception (eDRX) parameter in a connection management idle (CM-IDLE) state;
a parameter for configuring a mobile initiated connection only (MICO) mode;
a parameter for configuring a power saving mode (PSM) state;
a timing duration of a timer for a periodic registration;
a timing duration of a timer for a mobility reachability; or
a timing duration of a timer for an implicit deregistration.

6. A negotiation method, applied to a UE, comprising:
sending a UE capability indication of the UE for a satellite access to a network device; and
receiving network indication information sent by the network device, wherein the network indication information comprises any one of:
first indication information, indicating that the network device supports a discontinuous coverage for the satellite access;
second indication information, indicating that the UE provides a power-saving parameter and a NAS timer;
third indication information, indicating that the UE provides satellite coverage information related to the UE;
fourth indication information, indicating a first time range or a first timer for a random communication; or
fifth indication information, indicating a second time range for a delayed communication.

7. The method according to claim 6, further comprising:
sending the power-saving parameter and the NAS timer to the network device, and requesting an authorization from the network device, in response to the network indication information comprising the first indication information and/or the second indication information.

8. The method according to claim 6, further comprising:
sending the satellite coverage information related to the UE to the network device, in response to the network indication information comprising the first indication information and/or the third indication information.

9. The method according to claim 6, further comprising: in response to the network indication information comprising the first indication information and/or the fourth indication information,
setting a duration of a third timer based on the satellite coverage information related to the UE and the first time range; or
setting a UE unreachable period based on the satellite coverage information related to the UE and the first time range, wherein a starting time of the UE unreachable period is within the first time range before the UE loses a satellite signal coverage; or
setting a duration of a third timer based on the satellite coverage information related to the UE and a preset time range, wherein the preset time range is a time range preset for the UE; or
setting a UE unreachable period based on the satellite coverage information related to the UE and a preset time range, wherein a starting time of the UE unreachable period is within the preset time range before the UE loses a satellite signal coverage.

10. The method according to claim 9, further comprising:
after setting the duration of the third timer, starting the third timer, and communicating with the network device upon an expiration of the third timer.

11. The method according to claim 9, further comprising:
after setting the UE unreachable period, communicating with the network device before the starting time of the UE unreachable period.

12. The method according to claim 6, further comprising:
in response to the network indication information comprising the first indication information and/or the fourth indication information, starting the first timer, and communicating with the network device upon an expiration of the first timer.

13. The method according to claim 6, further comprising:
in response to the network indication information comprising the first indication information and/or the fifth indication information, setting a duration of a second timer based on the second time range and the satellite coverage information related to the UE.

14. The method according to claim 13, further comprising:
after setting the duration of the second timer, starting the second timer, and communicating with the network device upon an expiration of the second timer.

15. The method according to any one of claims 6 to 14, wherein the satellite coverage information related to the UE comprises at least one of:
a time that the satellite coverage is available to the UE;
a duration that the satellite coverage is available to the UE;
a time that no satellite coverage is available to the UE; or
a duration that no satellite coverage is available to the UE.

16. The method according to any one of claims 6 to 14, wherein the power-saving parameter and the NAS timer comprise at least one of:
an eDRX parameter in CM-IDLE;
a parameter for configuring a MICO mode;
a parameter for configuring a PSM state;
a timing duration of a timer for a periodic registration;
a timing duration of a timer for a mobility reachability; or
a timing duration of a timer for an implicit deregistration.

17. A communication device, comprising:
a first transceiving module, configured to receive a UE capability indication of a UE for a satellite access, and provide network indication information to the UE based on the UE capability indication,
wherein the UE capability indication of the UE for the satellite access indicates at least one of the following capabilities:
supporting a discontinuous coverage for the satellite access;
supporting sending a power-saving parameter and a non-access stratum (NAS) timer;
supporting sending satellite coverage information related to the UE;
supporting a random communication before an imminent loss of a satellite coverage; or
supporting a delayed communication after a restoration of a satellite coverage.

18. A communication device, comprising:
a second transceiver module, configured to send a UE capability indication of the UE for a satellite access to a network device; and
a third transceiver module, configured to receive network indication information sent by the network device, wherein the network indication information comprises any one of:
first indication information, indicating that the network device supports a discontinuous coverage for the satellite access;
second indication information, indicating that the UE provides a power-saving parameter and a NAS timer;
third indication information, indicating that the UE provides satellite coverage information related to the UE;
fourth indication information, indicating a first time range or a first timer for a random communication; or
fifth indication information, indicating a second time range for a delayed communication.

19. A communication device, comprising: a processor and a memory, wherein the memory is configured to store a computer program, and the processor is configured to execute the computer program stored in the memory to cause the communication device to perform the method according to any one of claims 1 to 5 or claims 6 to 16.

20. A communication device, comprising: a processor and an interface circuit, wherein the interface circuit is configured to receive code instructions and send the same to the processor, and the processor is configured to execute the code instructions to perform the method according to any one of claims 1 to 5 or claims 6 to 16.

21. A computer-readable storage medium, configured to store instructions that, when executed, cause the method according to any one of claims 1 to 5 or claims 6 to 16 to be implemented.
